# EUROPEAN PATENT APPLICATION

(11) **EP 1 317 093 A1**
(43) Date of publication of application: **04.06.2003**
(21) Application number: 01403092.8
(22) Date of filing: 30.11.2001
(51) Int. Cl.: H04L 5/12

(54) **Method for transmitting and retrieving an additional information in a data frame**

(71) Applicant: Mitsubishi Electric Information Technology Centre Europe B.V., 1119 NS Schiphol Rijk (NL)
(72) Inventor: Jechoux, Bruno, c/o Mitsubishi Electric ITE, 35700 Rennes (FR)
(74) Representative: Maillet, Alain

(57) **Abstract**

The invention concerns a method for transmitting an additional information in a data frame, for example a UMTS TDD burst, said data frame comprising different fields, each field comprising one or a plurality of symbols. Said additional information is coded by applying one or a plurality of phase offsets between a plurality of said different fields.

## Description

The present invention relates to a method for transmitting an additional information in a data frame comprising different fields. More particularly, the invention relates to a method for transmitting an additional information like a signalling information in a UMTS TDD burst.

It has been recently proposed within the framework of 3GPP forum to enhance the Universal Mobile Telecommunication System (UMTS) with a High Speed Downlink Packet Access (HSPDA). This new fonctionnality is aimed at enabling a fast access to packet services through a new transport channel called HS-DSCH for High Speed-Downlink Shared Channel. The physical channels to which the HS-DSCH is mapped can be shared by users in the time domain as well as in the code domain. According to his needs, a user is allocated one or more codes within HS-DSCH. In addition, the HS-DSCH is expected to accomodate different rates and channel conditions by supporting Adaptive Modulation and Coding Schemes (AMC) and Hybrid ARQ.

Since a user equipment (UE) may receive or not data packets over the HS-DSCH channel, it has been suggested, in order to avoid constantly monitoring the latter channel, to adopt a two-step signalling scheme. According to this scheme, there is transmitted over the conventional Dedicated Physical CHannel (DPCH) specific to the user, an indication, denoted HI (for HSPDA Indicator), indicating the presence or absence of an HSPDA access for the user. Hence, a user can notice an HSPDA access on channel HS-DSCH while receiving voice on the downlink DSCH. Upon detecting a positive indication HI on the DPCH channel, the user equipment retrieves from a channel called HS-SCCH (for High Speed Shared Control CHannel) a description of the HS-PDSCH allocation parameters and then uses these parameters to receive data on the HS-PDSCH channel.

Several methods have been proposed for transmitting the additional HI indication on the DPCH, for example in the document entitled "HI transmission on DPCH for 1.28 Mcps TDD HSPDA", presented in the working group 3GPP TSG-RAN WG1 Ad Hoc HSDPA and available under reference R1-01-1097 on the 3GPP website.

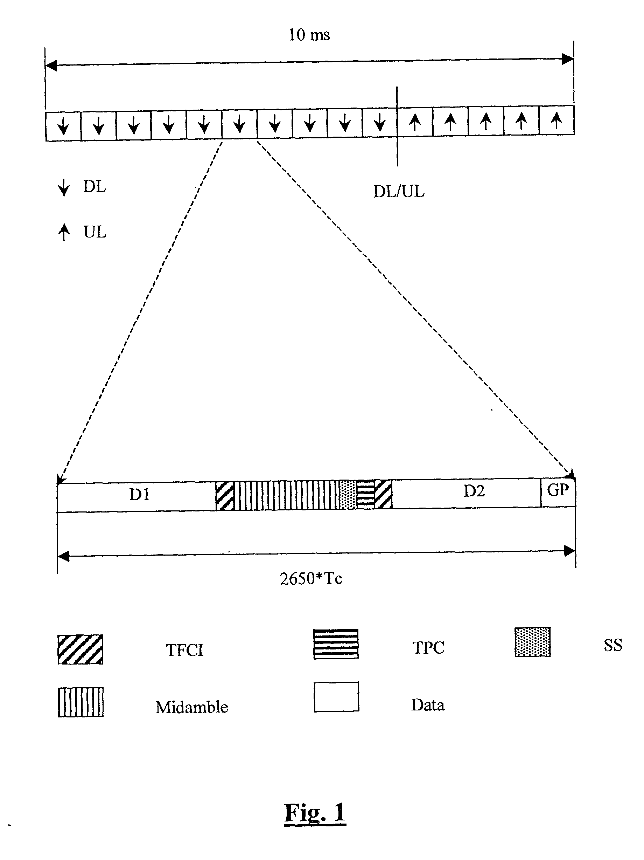

Fig. 1 illustrates schematically the general structure of a UMTS TDD transmission frame. This transmission frame is divided is divided into 15 timeslots each of 2560 chips of duration T_{c}. Each of the timeslots is allocated either to uplink or to downlink. One or more switching points separating the timeslot(s) dedicated to uplink transmission and those dedicated to the downlink transmission may be provided, like the switching point denoted DL/UL in Fig. 1. The general structure of an UMTS TDD downlink traffic burst on the DPCH channel within a downlink timeslot is illustrated in the lower part of Fig. 1. The UMTS TDD downlink traffic burst contains two data fields separated by a midamble and followed by a guard period. The midamble is used both for channel estimation and coherent detection at the user equipment receiver. The guard period is provided for separating transmissions within consecutive timeslots. The UMTS TDD downlink traffic burst further includes two fields respectively carrying the first and the second part of the Transmission Format Combination Indicator (TFCI) which gives an information describing the transport format of the current frame. Furthermore, the TPC (Transmitted Power Control) field carries an indication for the user equipment to increase or decrease the transmission power. Finally, an SS field (for Synchronization Symbols) provides a synchronisation information enabling the user equipment to adjust the timing of the next transmission.

It is important to note that, depending on allocation rules, the TPC, TFCI, SS and midamble fields may not be present while the blocks of data symbols, denoted D₁ and D₂ in Fig. 1 are obviously always present. The symbols contained in the TPC, TFCI and SS fields are spread with the same Orthogonal Variable Spreading Factor (OVSF) as the data blocks.

In case a QPSK modulation is used, the TPC field symbol may carry the following possible values:
TPC= '00' meaning that the Tx power is to be decreased
TPC= '11' meaning that the Tx power is to be increased

In case a 8-PSK modulation is used, the TPC field symbol may carry the following possible values:
TPC= '000' meaning that the Tx power is to be decreased
TPC= '111' meaning that the Tx power is to be increased

Without loss of generality, QPSK modulation is assumed in the following.

The document cited above proposes to transmit the additional HI indication by using the unused words '01' and '10', that is:
TPC= '00' → decrease Tx power and HI=0
TPC= '01' → decrease Tx power and HI=1
TPC= '10' → increase Tx power and HI=0
TPC= '11' → increase Tx power and HI=1

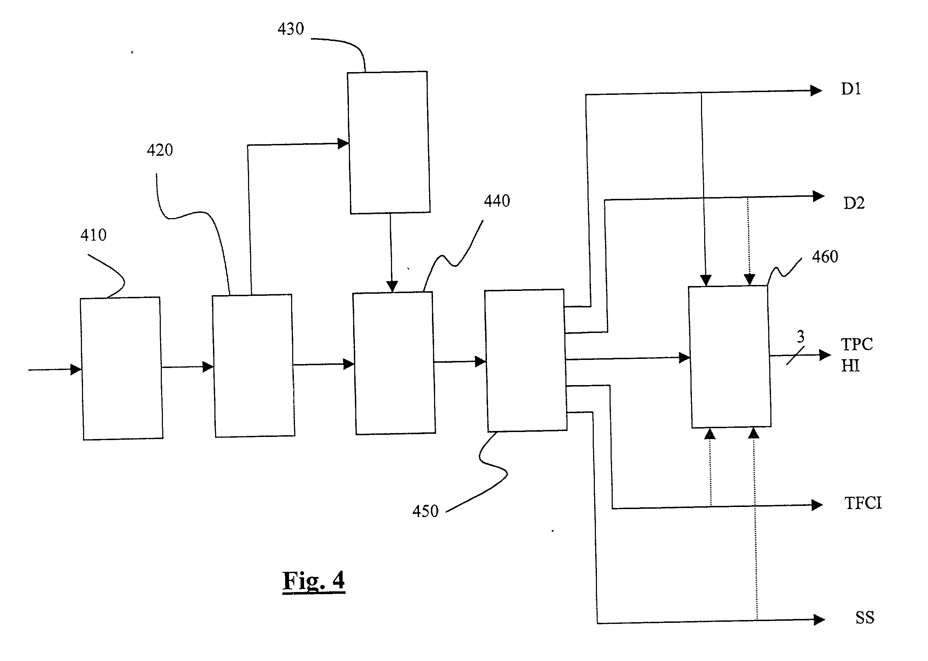

In other words TPC=(TPC1, TPC2) where TPC1 now indicates the decrease/increase of transmission power and TPC2 the absence/ presence of an HSPDA access. Fig. 4A illustrates the TPC symbol when a QPSK modulation is used. As it is well known in the field of modulation, since the distance between the '0x' symbols and the '1x' symbols are reduced in comparison with the distance between the '00' and the '11' symbols, the information of increasing/ decreasing the transmission power experiences a higher bit error rate (BER). Furthermore, the use of additional TPC values implies a modification of the present format.

Another possible way to transmit the additional HI indication would be to use a data symbol within one of the data blocks. However, this solution obviously reduces the user payload.

It is therefore an object of the present invention to propose a method for transmitting an additional information in a data frame, in particular in an UMTS TDD data frame, without reducing the user payload and without modifying the present format.

This object is attained by the method defined in appended claim 1, that is by a method for transmitting an additional information in a data frame, for example a UMTS TDD burst, said data frame comprising different fields, each field comprising one or a plurality of symbols, said additional information being coded by applying one or a plurality of phase offsets between a plurality of said different fields.

The invention is also defined by a method for retrieving such an additional information

The characteristics of the invention mentioned above, as well as others, will emerge more clearly from a reading of the following description in relation to the accompanying figures, amongst which:
Figs. 1 depicts schematically the general structure of an UMTS TDD transmission frame;
Fig. 2A to 2D schematically represent different phase offsets for different fields of a data frame according to different embodiments of the invention
Fig. 3 depicts a synoptic of the method for transmitting an additional information within a data frame according to the invention;
Fig. 4 depicts a synoptic of the method for retrieving said additional information;
Fig. 5A represents different symbols of the TPC field when using a method for coding an additional information of the prior art;
Fig. 5B represents different symbols of the TPC field when using the method for coding an additional information within a data frame according to the invention and when the additional information has a first value;
Fig. 5C represents different symbols of the TPC field when using the method for coding an additional information within a data frame according to the invention and when the additional information has a second value.

The general idea at the basis of the invention is to code the additional information mentioned above by applying one or more phase offsets between different fields of the data frame.

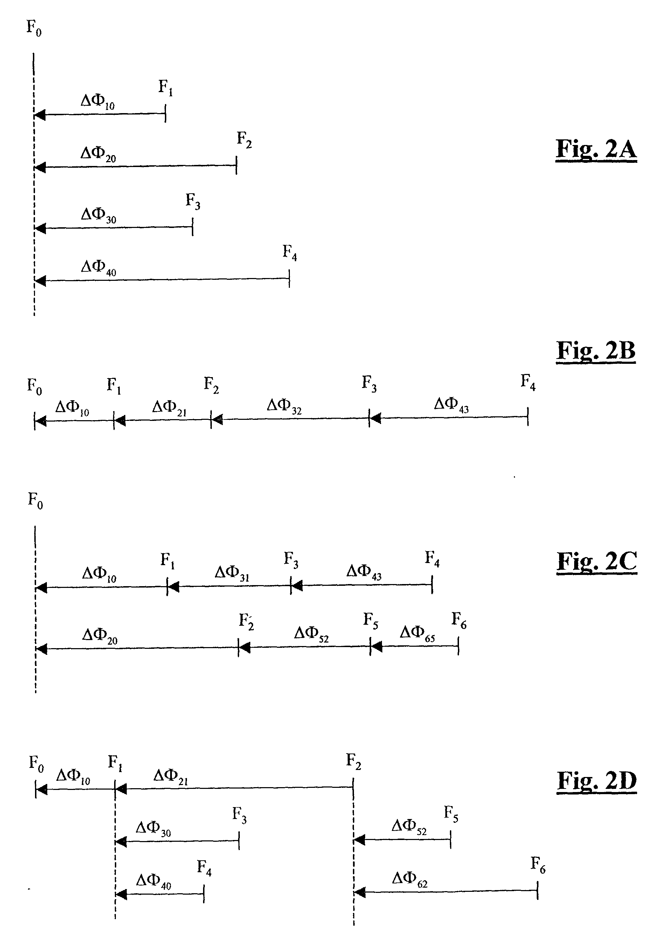

More specifically, according to a first embodiment, one field F₀ of the data frame is used as a common phase reference and another or a plurality of other fields are offset in phase with respect to F₀ . An example according to this embodiment is shown in Fig. 2A. The fields F₁, F₂, F₃, F₄ are phase offset or, in other words, the phase of these fields is modulated with respect to F₀. In this instance, the different phase offsets ΔΦ₁₀, ΔΦ₂₀, ΔΦ₃₀, ΔΦ₄₀ can be used for coding an additional information.

According to a second embodiment, a plurality of fields of the data frame are sequentially offset in phase the one relative to the other. An example according to this embodiment is shown in Fig. 2B. The fields F₁, F₂, F₃, F₄ are offset by the phases ΔΦ₁₀, ΔΦ₂₁, ΔΦ₃₂, ΔΦ₄₃ relative to the fields F₀ ,F₁, F₂, F₃, respectively. The different phase offsets ΔΦ₁₀, ΔΦ₂₁, ΔΦ₃₂, ΔΦ₄₃ can be used for coding an additional information.

According to a third embodiment, the methods according to the first and second embodiments are combined.

In a first variant, the method of the first embodiment is applied first. An example illustrating the first variant is shown in Fig. 2C. In this instance, the fields F₁, F₂ are phase offset with respect to a common reference F₀ whereas the fields F₃, F₄, on the one hand, and the fields F₅, F₆, on the other hand, are sequentially phase offset as in the second embodiment. The different phase offsets ΔΦ₁₀, ΔΦ₂₀, ΔΦ₃₁, ΔΦ₄₃, ΔΦ₅₂, ΔΦ₆₅ can be used for coding an additional information.

In a second variant, the method of the second embodiment is applied first. An example illustrating the second variant is shown in Fig. 2D. In this instance, the fields F₁, F₂ are sequentially offset by phase ΔΦ₁₀, ΔΦ₂₁ whereas the fields F₃, F₄, on the one hand are offset with respect to a first common reference F₁ and the fields F₅, F₆, on the other hand are offset with respect to a second common reference F₂, as in the first embodiment. The different phase offsets ΔΦ₁₀, ΔΦ₂₀, ΔΦ₃₁, ΔΦ₄₃, ΔΦ₅₂, ΔΦ₆₅ can be used for coding an additional information.

It will be understood that applying phase offsets between the different fields can be regarded as a phase modulation at the field scale. When a first field is phase offset with respect to a second field, all the symbols of the first field are phase rotated with respect to all the symbols of the second field.

Advantageously, in the various embodiments recited above, the phase offsets will be chosen to have only two values, for example to 0 or π/2.

Turning now to the supplementary information to be transmitted in the UMTS TDD data frame, a single bit suffices for coding the HI indicator and therefore only two offset values are required: ΔΦ₁₀= ψ₁ , ΔΦ₁₀= ψ₂. For example, the field F₀ could be the data field (first or second data blocks) and the field F₁ could be the TPC field, although other fields of the data frame may be contemplated, e.g. TFCI or SS. Taking as offset values 0, π/2, the new transmission scheme can be summarised as follows:
TPC= '00'; ΔΦ₁₀=0 → decrease Tx power and HI=0
TPC= '00'; ΔΦ₁₀=1 → decrease Tx power and HI=1
TPC= '11'; ΔΦ₁₀=0 → increase Tx power and HI=0
TPC= '11'; ΔΦ₁₀=1 → increase Tx power and HI=1

In contrast with the prior art transmission methods of indicator HI, no bit has to be borrowed from an existing field and in particular the payload remains unchanged.

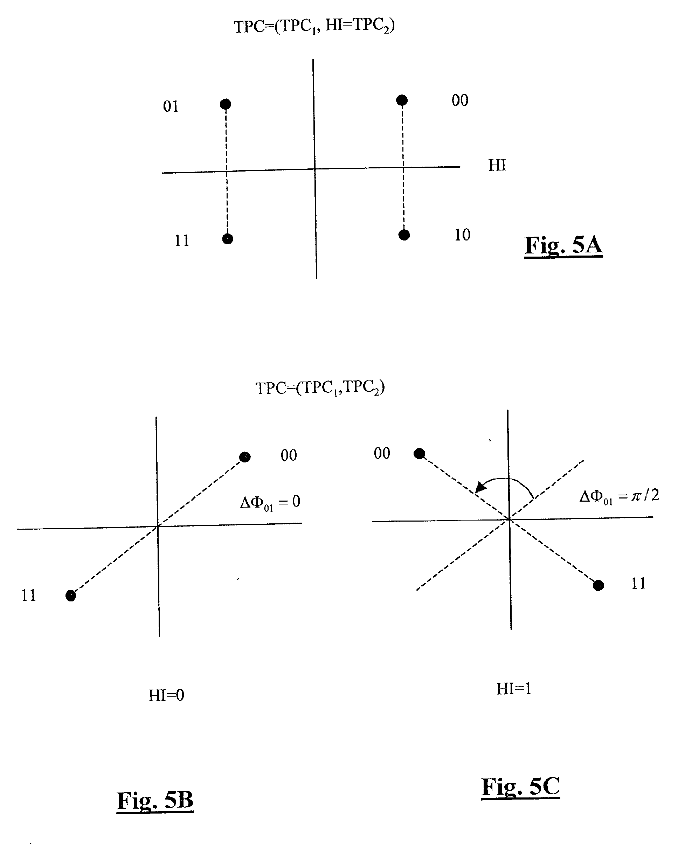

Figs. 5B and 5C respectively represent the symbols of the field TPC when HI=0 and HI=1 respectively. It is assumed that the bits of the data frame are QPSK modulated.

When HI=0 the TPC field and the data field are in-phase. The symbols TPC= '00' and TPC= '11' give the increase/ decrease information. When HI=1 the TPC and data filed are in quadrature and the symbols TPC= '00' and TPC= '11' are simply π/2 rotated with respect to the reference field but the distance between them remains unchanged.

It is important to note that coding the HI indicator by applying a phase offset according to the invention directly operates at the physical layer level and therefore ensures a fast response of the equipment and consequently a fast access to the HS-PDSCH channel.

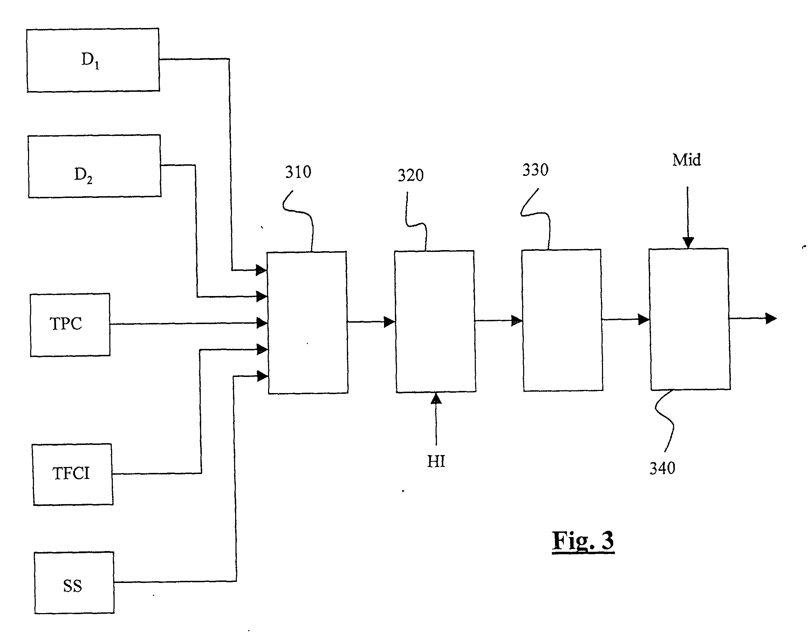

Fig. 3 illustrates schematically a method of transmitting a supplementary information according to the invention, when the data frame is a UMTS TDD data burst and the additional information to be coded is the HI indicator.

The data blocks D₁, D₂, and the TPC, TFCI, SS words to be transmitted in the UMTS TDD data burst are multiplexed in the first multiplexer 310 and transmitted to the phase modulator 320. In 320, a phase offset ΔΦ₁₀ with respect to a field of reference F₀, depending on the HI value, is applied to the field F₁. For example, the field F₀ will be the data field (first or second data blocks) and the field F₁ will be the TPC field. The data of the different fields are then spread by an OVSF code and coded by a scrambling code. The training sequence (midamble Mid) is then inserted in the data burst by the second multiplexer 340.

Fig. 4 illustrates schematically a method for retrieving the additional information at the receiver side. A data frame, in this instance a traffic burst, is received in the selected timeslot in the burst receiver 410 and output to a first demultiplexer 420. This demultiplexer separates the midamble from the other fields D1, D2, TPC, TFCI, SS. The midamble is used in the channel estimator 430 to estimate the channel response coefficients. In 440, the symbols belonging to the fields D1, D2, TPC, TPC1 and SS are de-spread, de-scrambled and detected. After detection, the different fields are demultiplexed in the demultiplexer 450. The phase estimator 460 estimates the phase offset ΔΦ₁₀ between a field F₁ and a field of reference F₀, in the present instance between the field TPC and the field D₁. Of course, as already mentioned above and shown by dotted lines on Fig. 4, other fields of reference may be envisaged. The phase offset ΔΦ₁₀ gives the HI value. Once the offset is known, the TPC symbol and consequently the information increase/ decrease Tx power can be obtained .

More generally, it should be clear that, if an additional information is to be transmitted in a data frame, e.g. a UMTS TDD burst, one or a plurality of phase offsets ΔΦᵢⱼ can be applied between different fields for coding this information. If the phase offsets have only two values 0, π/2, coding of N additional bits requires N such phase offsets. Obviously, a larger number of values for the phase offsets, i.e. a higher modulation rate, allows to reduce number of the phase offsets accordingly.

## Claims

1. Method for transmitting an additional information in a data frame, for example a UMTS TDD burst, said data frame comprising different fields, each field comprising one or a plurality of symbols, **characterised in that** said additional information is coded by applying one or a plurality of phase offsets between a plurality of said different fields.

2. Method according to claim 1, **characterised in that** said phase offsets are applied between a first field (F₀) used as common phase reference and one or a plurality of said different fields.

3. Method according to claim 1, **characterised in that** at least some of said plurality of said different fields are sequentially offset in phase the one relative to the other.

4. Method according to any preceding claim, **characterised in that** the values of the phase offsets are 0 and π/2.

5. Method according to any preceding claim, **characterised in that**, the data frame being a UMTS TDD burst including a first field D1 and a second field D2 comprising data symbols, a field TPC comprising a symbol controlling an increase or decrease of a transmission power, a field TFCI comprising symbols describing a transport format, a field SS comprising synchronisation symbols, said phase offsets are applied between a plurality of said fields D1, D2, TPC, TFCI, SS.
